Europäisches Patentamt

European Patent Office

Office européen des brevets

(19)

(11) Numéro de publication: **0 125 960**
**B1**

(12) # FASCICULE DE BREVET EUROPEEN

(45) Date de publication du fascicule du brevet:
11.06.86

(51) Int. Cl.⁴: **B 60 T 8/26,** B 60 T 8/54

(21) Numéro de dépôt: **84400779.9**

(22) Date de dépôt: **18.04.84**

(54) Correcteur de pression de freinage sensible à la décélération.

(30) Priorité: **29.04.83 FR 8307143**

(43) Date de publication de la demande:
**21.11.84 Bulletin 84/47**

(45) Mention de la délivrance du brevet:
**11.06.86 Bulletin 86/24**

(84) Etats contractants désignés:
**DE GB IT**

(56) Documents cités:
**GB - A - 1 079 508**
**GB - A - 2 006 361**
**GB - A - 2 101 248**
**US - A - 2 242 297**
**US - A - 4 175 791**

(73) Titulaire: **BENDIX France, 126, rue de Stalingrad,
F-93700 Drancy (FR)**

(72) Inventeur: **Riquart, Christian, 33 rue Fessart,
F-75019 Paris (FR)**
Inventeur: **Sauvée, Jean-Paul, 76 bld Félix Faure,
F-93300 Aubervilliers (FR)**

(74) Mandataire: **Poidatz, Emmanuel et al, Service Brevets
Bendix 44 rue François 1er, F-75008 Paris (FR)**

LIBER, STOCKHOLM 1986

## Description

La présente invention concerne les correcteurs de pression de freinage sensibles à la décélération, pour installations de freinage hydraulique de véhicule, et plus particulièrement un correcteur de pression de freinage du type comprenant un corps de boîtier dans lequel est disposé un piston étagé ayant comme première partie active de petite surface une partie de prolongement tubulaire s'étendant dans la direction opposée à une chambre de sortie et délimitant une chambre d'entrée formée dans le corps et destinée à être reliée à un émetteur de pression de freinage, et une seconde partie active de grande surface associée à la chambre de sortie, formée dans le corps et destinée à être reliée à au moins un moteur de frein, les deux chambres étant reliées l'une à l'autre par un passage formé coaxialement dans le piston et pourvu, côté chambre d'entrée, d'un siège pour un organe obturateur inertiel disposé dans le corps de boîtier.

Un correcteur de ce type est décrit par exemple dans le document US-A-2 242 297 et est conçu pour adresser au moteur de frein une pression normalement proportionnelle à la pression d'entrée fournie par l'émetteur de pression de freinage mais modulable selon les conditions de décélération du véhicule, l'organe obturateur inertiel étant susceptible, dans ces conditions de décélération particulière, de venir en appui sur son siège, typiquement en se déplaçant le long d'une rampe inclinée constituée par des moyens de guidage incorporés dans le corps de correcteur, ce dernier étant positionné dans le véhicule suivant un angle déterminé par rapport à l'horizontale.

Dans l'agencement de correcteur connu, le piston étagé coopère à coulissement par ses surfaces périphériques de diamètres différents avec des alésages, également de diamètres différents, du corps, imposant ainsi à un dimensionnement longitudinal minimum pour le correcteur. D'autre part, dans le correcteur du document susmentionné, le corps est fermé du côté de la chambre de sortie ayant le plus grand diamètre par un couvercle, le montage de ce dernier sur le corps nécessitant des moyens d'étanchéité adéquats.

La présente invention a pour objet de proposer un correcteur de pression de freinage du type susmentionné permettant un agencement plus compact, avec un équipage de pistons présentant une inertie réduite, et permettant de supprimer la jonction étanche entre le couvercle et le corps de boîtier du correcteur.

D'autres caractéristiques et avantages de la présente invention ressortiront de la description suivante de modes de réalisation, donnés à titre illustratif mais nullement limitatif, faite en relation avec les dessins annexés, sur lesquels:

– la figure 1 représente schématiquement, en coupe longitudinale, un premier mode de réalisation d'un correcteur selon l'invention ; et

– les figures 2 et 3 représentent, également en coupe longitudinale, des second et troisième modes de réalisation d'un correcteur selon l'invention.

Dans la description qui va suivre, et sur les dessins, les éléments identiques ou analogues comportent les mêmes chiffres de référence, éventuellement indicés.

Comme représenté sur les dessins, un correcteur de pression de freinage selon l'invention comprend un corps de boîtier 1, de configuration générale tubulaire, comportant une partie principale 2 formée avec un alésage 3, et un prolongement axial de diamètre réduit 4 pourvu d'un moyen de raccordement 5 de la cavité intérieure définie par l'alésage 3 avec un moteur de frein de roue de véhicule 6. L'extrémité de l'alésage 3 opposée au prolongement 4 est pourvue d'un taraudage pour recevoir la périphérie filitée d'un couvercle de correcteur, désigné dans son ensemble par la référence 7 et muni d'un moyen de raccordement 8 de la cavité intérieure du corps de boîtier 1 défini par l'alésage 3 avec un émetteur de pression de freinage 9, typiquement la chambre secondaire d'un maître-cylindre double.

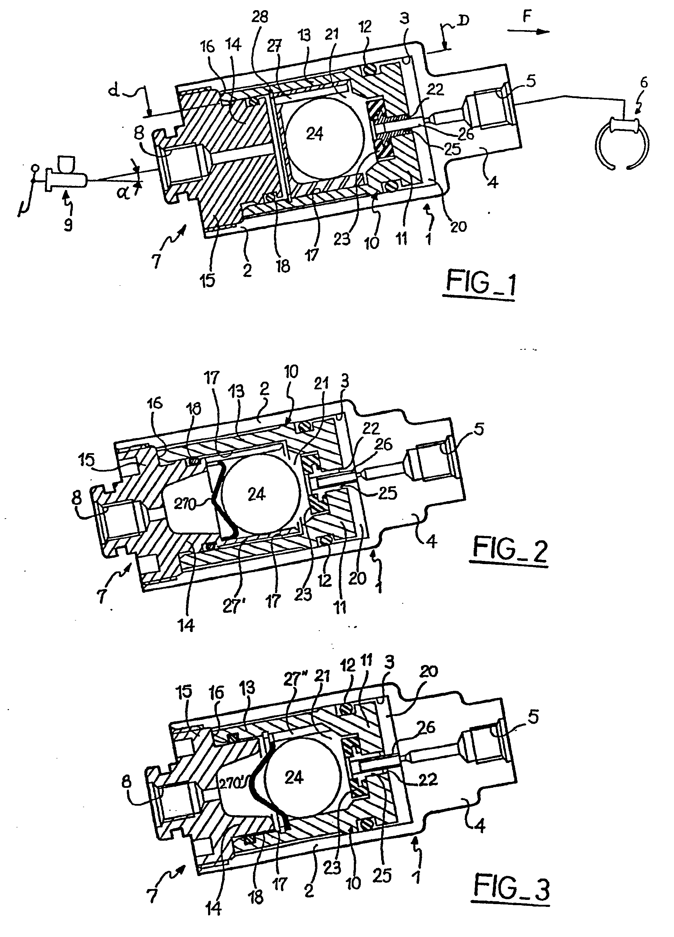

Le correcteur comporte un piston étagé, désigné dans son ensemble par la référence 10 comportant une partie de corps de piston 11 monté à coulissement étanche dans l'alésage 3 au moyen d'un joint annulaire 12 reçu dans une gorge périphérique de la partie de corps 11, et une partie de prolongement tubulaire 13 de diamètre extérieur réduit et s'étendant axialement, en configuration de montage, dans la direction opposée au prolongement 4 du corps de boîtier 1. Le couvercle 7 comporte une saillie centrale tubulaire 14 de diamètre extérieur inférieur au diamètre extérieur fileté du corps de couvercle 15 en se raccordant à ce dernier par un épaulement radial 16. La partie de prolongement tubulaire 13 du piston étagé 10 est formée avec un alésage 17 et est dimensionnée axialement de façon à coopérer en permanence en coulissement étanche avec la périphérie de la saillie centrale 14 du couvercle 7, au moyen d'un joint annulaire 18 disposé dans une gorge, soit formée dans la saillie centrale 14 au voisinage de l'extrémité axiale (fig. 1 et 2), soit formée dans le prolongement 13 au voisinage de son extrémité (fig. 3).

Comme on le voit sur la figure 1, en configuration assemblée, le corps de piston 11 délimite ainsi, dans le fond de la cavité intérieure du corps de boîtier 1 formée par l'alésage 3 une chambre de sortie 20 communiquant en permanence avec le moyen de raccordement de sortie 5, le piston étagé 10 présentant, dans cette chambre de sortie 20 une surface active de grand diamètre D correspondant au diamètre de l'alésage 3. A l'opposé, la saillie centrale 14 du couvercle 7 et la partie de prolongement tubulaire 13 du piston étagé 10 définissent, au sein de ce dernier, une chambre d'entrée 21, communiquant en permanence via le passage du couvercle 7, avec la moyen de raccordement d'entrée 8, le piston étagé offrant, dans cette chambre d'entrée 21, une surface active de petit diamètre d correspondant au diamètre de l'alésage 17. Les deux chambres 20 et 21 communiquent entre elles par un passage axial central 22 traversant la partie de corps de piston 11.

Autour de l'extrémité du passage 22 débouchant dans la chambre d'entrée 21 (c'est-à-dire dans l'alésage 17) est prévu un anneau en matériau élastomère 23 formant siège pour un organe obturateur inertiel 24, constitué typiquement par une bille pesante, disposé dans la chambre d'entrée 21 et maintenu normalement écarté de l'anneau 23 sous l'effet de son propre poids, le correcteur étant typiquement installé dans le véhicule pour que son axe longitudinal fasse avec l'horizontale un angle α déterminé. L'anneau formant siège 23 est avantageusement surmoulé sur un insert tubulaire 25 emmanché dans le passage 22.

Selon une caractéristique de l'invention, dans l'insert 25 est monté à coulissement libre un élément de butée 26, constitué sous la forme d'un tube fendu, fixé dans le corps de boîtier ou, plus simplement, agencé pour porter en butée par son extrémité opposée au siège 23 contre la paroi de fond de la chambre de sortie 20 au niveau de l'endroit où débouche, dans cette chambre de sortie 20, le moyen de raccordement 5. De cette façon, si l'organe inertiel 24 est plaqué contre son siège de l'anneau 23 et que la pression de commande dans la chambre d'entrée 21 exède un niveau tel que le piston étagé 10 se déplace au-delà d'une course déterminée, c'est-à-dire vienne en butée contre le fond de la chambre de sortie 20, l'organe inertiel 24 est dégagé de son siège de l'anneau 23 par l'élément de butée 26, de façon à rétablir la communication entre les chambres d'entrée et de sortie, par exemple pour conserver dans le moteur de frein 6 une élévation de pression proportionnelle à celle de la pression d'entrée, ou encore pour garantir une purge complète du système de freinage.

Dans le mode de réalisation de la figure 1, la structure de guidage et de maintien de la bille 24 est constituée par une cage à fond ajourée 27 montée dans l'alésage 17 au moyen d'un anneau élastique de retenue 28, le fond, formant chicane, de la cage 27 étant disposé au voisinage de la saillie centrale 14 du couvercle 7. Dans le mode de réalisation de la figure 2, la structure de maintien et de guidage formant rampe de la bille 24 est constituée par un prolongement tubulaire ajouré 27' de la saillie centrale 14 du couvercle 7 s'étendant axialement dans l'alésage 17, une cloison ajourée 270 étant rapportée dans la partie de prolongement tubulaire 27' au niveau de son raccordement avec la saillie centrale 14. Dans le mode de réalisation de la figure 3, la structure de maintien et de guidage formant rampe de la bille 24 est constituée par des nervures 27" s'étendant radialement vers l'intérieur dans l'alésage 17 de la partie de prolongement tubulaire 13 du piston étagé 10 sur une portion de l'extension axiale de l'alésage 17 voisine du siège 23, et d'une cloison ajourée rapportée 270'. Dans tous les modes de réalisation, l'épaulement 16 du couvercle 7 forme butée de retour dans la position de repos du piston étagé 10 (sous l'effet de la pression différencielle s'exerçant sur ces surfaces actives) en coopérant avec l'extrémité libre de la partie de prolongement tubulaire 13.

## Revendications

1. Correcteur de pression de freinage sensible à la décélération, pour installation de freinage hydraulique d'un véhicule, comprenant un corps d boîtier (1) dans lequel est disposé un piston étagé (10) ayant comme première partie active de petite surface (d) une partie de prolongement tubulaire (13) s'étendant dans la direction opposée à une chambre de sortie (20) et délimitant une chambre d'entrée (21) formée dans le corps de boîtier et destinée à être reliée à un émetteur de pression de freinage (9), et une seconde partie active (11) de grande surface (D) associée à la chambre de sortie (20) formée dans le corps de boîtier et destinée à être reliée à au moins un moteur de frein (6), les deux chambres (20, 21) étant reliées l'une à l'autre par un passage (22) formé coaxialement dans le piston étagé (10) et pourvu, côté chambre d'entrée (21), d'un siège (23) pour un organe obturateur inertiel (24) disposé dans le corps de boîtier (1), caractérisé en ce que la chambre d'entrée (21) est délimitée partiellement par un couvercle (7) monté dans le corps de boîtier (1), la partie de prolongement tubulaire (13) du piston étagé (10) coopérant intérieurement à coulissement étanche avec une saillie centrale de diamètre réduit (14) du couvercle (7) s'étendant dans le corps de boîtier (1 et délimitant la dite chambre d'entrée (21).

2. Correcteur selon la revendication 1, caractéris en ce que la saillie centrale (14) du couvercle (7) se raccorde à la partie de corps (15) du couvercle par un épaulement radial s'étendant vers l'extérieur (1( formant butée de retour pour le piston étagé (10) en coopérant avec l'extrémité extérieure de la part de prolongement tubulaire (13) du piston étagé.

3. Correcteur selon la revendication 1 ou la revendication 2, caractérisé en ce que la saillie centrale (14) du couvercle (7) comporte un joint annulaire périphérique (18).

4. Correcteur selon la revendication 1 ou la revendication 2 caractérisé en ce que le prolongement tubulaire (13) comporte un joint annulaire (18) coopérant à coulissement étanche avec la saillie centrale (14) du couvercle (7).

5. Correcteur selon l'une des revendications 1 à 4, caractérisé en ce que l'obturateur inertiel (24) es disposé dans une structure de guidage et de maintien (27, 27") solidaire du piston étagé (10).

6. Correcteur selon l'une des revendications 1 à 4, caractérisé en ce que l'obturateur inertiel (24) es disposé dans une structure de guidage et de maintien (27') solidaire de la saillie centrale (14) du couvercle (7).

7. Correcteur selon l'une des revendications précédentes, caractérisé en ce qu'il comprend un élément de butée (26) disposé dans le passage (22 du piston étagé pour dégager l'organe inertiel (24) de son siège (23) au-delà d'une course déterminée du piston étagé (10) dans la direction l'éloignant di couvercle (7).

8. Correcteur selon la revendication 7, caractéris en ce que l'élément de butée est un tube ajouré (26).

9. Correcteur selon l'une des revendications précédentes, caractérisé en ce que le siège est constitué d'un anneau de matériau élastomère (23) monté sur un insert tubulaire (25) introduit dans le passage (22) du piston étagé (10).

10. Correcteur selon l'une des revendications précédentes, caractérisé en ce que le corps de boîtier (1) est cylindrique et comporte, à l'opposé du couvercle (7) un prolongement axial (4) pourvu de moyens de raccordement (5) de la chambre de sortie (20) à une tuyauterie de moteur de frein (6).

**Patentansprüche**

1. Verzögerungsabhängiger Bremsdruckregler für die hydraulische Bremsanlage eines Fahrzeuges, mit einem Gehäuse (1), in dem ein Stufenkolben (10) angeordnet ist, der versehen ist mit einem ersten wirksamen Abschnitt kleiner Fläche (d) in Form eines rohrförmigen Verlängerungsabschnitts (13), der sich in der von einer Auslaßkammer (20) abgewandten Richtung erstreckt und eine Einlaßkammer (21) begrenzt, die im Gehäuse gebildet und mit einer Bremsdruckquelle (9) verbindbar ist, sowie mit einem zweiten wirksamen Abschnitt (11) großer Fläche (D), der der Auslaßkammer (20) zugeordnet ist, die im Gehäuse gebildet und mit mindestens einem Bremsmotor (6) verbindbar ist, wobei die beiden Kammern (20, 21) untereinander durch einen Kanal (22) verbunden sind, der koaxial im Stufenkolben (10) gebildet ist und auf der Seite der Einlaßkammer (21) mit einem Sitz (23) für einen im Gehäuse (10) angeordnet Trägheitsschließkörper (24) versehen ist, dadurch gekennzeichnet, daß die Einlaßkammer (21) teilweise von einem im Gehäuse (1) angebrachten Dekkel (7) begrenzt wird, wobei der rohrförmige Verlängerungsabschnitt (13) des Stufenkolbens (10) auf der Innenseite abgedichtet gleitend mit einem zentralen Vorsprung (14) verringerten Durchmessers des Deckels (7) zusammenwirkt, der in dem Gehäuse (1) verläuft und die Einlaßkammer (21) begrenzt.

2. Bremsdruckregler nach Anspruch 1, dadurch gekennzeichnet, daß der zentrale Vorsprung (14) des Deckels (7) sich an den Körper (15) des Deckels durch eine sich ins Innere erstreckende radiale Schulter (16) anschließt, die einen Rückhubanschlag für den Stufenkolben (10) bildet, indem sie mit dem äußeren Ende des rohrförmigen Verlängerungsabschnitts (13) des Stufenkolbens zusammenwirkt.

3. Bremsdruckregler nach Anspruch 1 oder 2, dadurch gekennzeichnet, daß der zentrale Vorsprung (14) des Dekkels (7) am Außenumfang eine Ringdichtung (18) trägt.

4. Bremsdruckregler nach Anspruch 1 oder 2, dadruch gekennzeichnet, daß die rohrförmige Verlängerung (13) eine Ringdichtung (18) trägt, die gleitend und abgedichtet mit dem zentralen Vorsprung (14) des Deckels (7) zusammenwirkt.

5. Bremsdruckregler nack einem der Ansprüche 1–4, dadurch gekennzeichnet, daß der Trägheitsschließkörper (24) in einer mit dem Stufenkolben (10) fest verbundenen Führungs- und Halteanordnung (27, 27'') angeordnet ist.

6. Bremsdruckregler nach einem der Ansprüche 1–4, dadurch gekennzeichnet, daß der Trägheitsschließkörper (24) in einer mit dem zentralen Vorsprung (14) des Deckels (7) fest verbundenen Führungs- und Halteanordnung (27') angeordnet ist.

7. Bremsdruckregler nach einem der vorhergehenden Ansprüche, gekennzeichnet durch ein Anschlagsteil (26), der in dem Kanal (22) des Stufenkolbens angeordnet ist, um den Trägheitsschließkörper (24) von seinem Sitz (23) abzuheben, wenn sich der Stufenkolben (10) in einer Richtung weg vom Deckel (7) über eine vorgegebene Strecke hinaus bewegt.

8. Bremsdruckregler nach Anspruch 7, dadurch gekennzeichnet, daß das Anschlagsteil ein Rohrstück (26) ist.

9. Bremsdruckregler nach einem der vorhergehenden Ansprüche, dadurch gekennzeichnet, daß der Sitz von einem Ring (23) aus elastomerem Material gebildet wird, der auf einem in den Kanal (22) des Stufenkolbens (10) eingesetzten rohrförmigen Einsatz (25) angebracht ist.

10. Bremsdruckregler nach einem der vorhergehenden Ansprüche, dadurch gekennzeichnet, daß das Gehäuse (1) zylindrisch ist und entgegengesetzt zum Deckel (7) eine axiale Verlängerung (4) aufweist, die mit einem Anschluß (5) zum Verbinden der Auslaßkammer (20) mit einer Bremsmotorleitung versehen ist.

**Claims**

1. A deceleration-responsive brake pressure regulator for a hydraulic brake system of a vehicle, comprising a casing member (1) receiving a stepped piston (10) having a first active portion of small surface (d) comprised of a tubular extension (13) extending in the direction opposite to an outlet chamber (20) and delimiting an inlet chamber (21) provided in the casing member and adapted to be connected to a brake pressure source (9), and a second active portion (11) of great surface (D) associated with the outlet chamber (20) provided in the casing member and adapted to be connected to at least one brake motor (6), the two chambers (20, 21) being connected to each other by a passage (22) formed coaxially in the stepped piston (10) and provided adjacent to the inlet chamber (21) with a seat (23) for an inertia closure member (24) disposed in the casing member (1), characterized in that the inlet chamber (21) is partially delimited by a cover (7) mounted in the casing member (1), the tubular extension (13) of the stepped piston (10) at its inner surface slidingly and sealingly engaging a central projection (14) of reduced diameter of the cover (7) extending within the casing member (10) and delimiting said inlet chamber (21).

2. The regulator of claim 1, characterized in that the central projection (14) of the cover (7) joins the body portion (15) of the cover by a radial shoulder extending towards the exterior (16) and forming a return abutment of the stepped piston (10) by cooperating with the external extremity of the tubular extension (13) of the stepped piston.

3. The regulator according to claim 1 or claim 2, characterized in that the central projection (14) of the cover (7) carries a peripheral annular seal (18).

4. The regulator of claim 1 or claim 2, characterized in that the tubular extension (13) carries an annular seal (13) slidingly and sealingly engaging the central projection (14) of the cover (7).

5. The regulator of any of claims 1 to 4, characterized in that the inertia closure member (24) is disposed in a guiding and holding structure (27, 27") integral with the stepped piston (10).

6. The regulator according to any of claims 1 to 4, characterized in that the inertia closure member (24) is disposed in a guiding and holding structure (27') integral with the central projection (14) of the cover (7).

7. The regulator according to any of the preceding claims, characterized in that it comprises an abutment member (26) disposed in the passage (22) of the stepped piston for disengaging the inertia closure member (24) from its seat (23) if the stepped piston (10) has moved in the direction away from the cover (7) beyond a predetermined distance.

8. The regulator of claim 7, characterized in that the abutment member is a tube member (26).

9. The regulator of any of the preceding claims, characterized in that the seat is comprised of an annular member (23) of elastomeric material mounted on a tubular insert (25) inserted in the passage (22) of the stepped piston (10).

10. The regulator of any of the preceding claims, characterized in that the casing member (1) is cylindrical and comprises opposite to the cover (7) an axial extension (4) provided with means (5) for connecting the outlet chamber (20) to a brake motor line.

FIG_1

FIG_2

FIG_3